# EUROPEAN PATENT APPLICATION

(11) **EP 2 633 940 A1**
(43) Date of publication of application: **04.09.2013**
(21) Application number: 13156564.0
(22) Date of filing: 25.02.2013
(51) Int. Cl.: B23K 26/067, B23K 26/08, B23K 26/38, B23K 26/40

(54) **Laser processing device**

(30) Priority: 29.02.2012 JP 2012043428
(71) Applicant: Mitsuboshi Diamond Industrial Co., Ltd., Settsu Osaka 566-0034 (JP)
(72) Inventor: Hayashi, Takahisa, Settsu,, Osaka 566-0034 (JP); Shimizu, Seiji, Settsu,, Osaka 566-0034 (JP)
(74) Representative: TBK

(57) **Abstract**

[Object] Either a deflecting unit or a deflecting and splitting unit is easily structured by enhancing flexibility in designing thereof, and further, a processing object is inhibited from being damaged when being processed.

[Means for Achieving Object] The present device includes: a work table 2 on which a processed object is disposed; a laser output section 15 configured to output a laser beam; a deflecting and splitting mechanism 31 configured to deflect and split the laser beam outputted from the laser output section 15; an image rotator 14 configured to rotate the deflected laser beam about a rotational axis arranged in a direction different from the direction of the deflected laser beam; and an fθ lens 20 configured to focus the laser beam on the processed object.

## Description

### TECHNICAL FIELD

The present invention relates to a laser processing device configured to process a processed object by laser beam irradiation

### BACKGROUND ART

A device described in Patent Literature 1 has been known as a laser processing device. A processing device of this type is configured to irradiate a green laser beam having a wavelength of roughly 532 nm onto a workpiece such as a glass substrate. In general, a green laser beam penetrates the glass substrate. However, the laser beam is absorbed by the glass substrate under a condition that the laser beam is concentrated and the intensity thereof exceeds a predetermined threshold. Under the condition, plasma is generated in a portion of the glass substrate on which the laser beam is concentrated. This results in evaporation of the glass substrate. Based on the aforementioned principle, various types of processing can be executed, including forming a hole in the glass substrate.

On the other hand, Patent Literature 2 describes a laser processing device configured to rotate a laser beam on the surface of a workpiece in a predetermined trajectory (e.g., a circular trajectory, an oval trajectory, etc.) and scan the workpiece with the laser beam in an arbitrary direction (e.g., a transverse (right-and-left) direction, a vertical (up-and-down) direction, an oblique direction, etc.)

Yet on the other hand, Patent Literature 3 describes that a glass substrate is processed by forming a plurality of focal spots on a glass substrate using a diffractive optical element (DOE), and further, by rotating the plural focal spots and simultaneously causing the focal spots to scan the glass substrate along a processing line.

### CITATION LIST

### PATENT LITERATURE

Patent Literature 1: Japan Laid-open Patent Application Publication No. JP-A-2007-118054
Patent Literature 2: Japan Laid-open Patent Application Publication No. JP-A-H08-192286
Patent Literature 3: Japan Laid-open Patent Application Publication No. JP-A-2011-11917

### SUMMARY OF THE INVENTION

### Technical Problems

A conventional laser processing device as described above is configured to rotate either a unit configured to deflect a laser beam or a unit configured to deflect and split a laser beam. In such structure, many restraints are imposed on the deflecting unit or the deflecting and splitting unit. For example, it is required to keep each of the aforementioned units in a good rotational balance and to prevent each of the aforementioned units from tilting with respect to an incident beam so that a deflection angle is not thereby affected. Further, when each unit is formed by a plurality of elements, it is required to prevent positional relations among the respective elements from being lost even in rotating each unit at a high speed.

It should be noted that the aforementioned drawbacks are expected to be solvable in using such DOE as described in Patent Literature 3. However, in using a DOE, a diffracted light, having an order higher than that of a plus/minus first-order diffracted light contributing to processing, is irradiated outside a processing line. This produces a drawback that a glass substrate is damaged by the irradiation.

It is an object of the present invention to easily structure either a deflecting unit or a deflecting and splitting unit by enhancing flexibility in designing thereof, and further, to inhibit damage of a processed object in processing the processed object.

It is another object of the present invention to reduce a processing time.

### Solution to Problems

A laser processing device according to a first aspect of the present invention is a device configured to irradiate a laser beam onto a processed object for processing the processed object, and includes: a work table on which the processed object is disposed; a laser output section configured to output the laser beam; a laser beam deflecting unit configured to deflect the laser beam outputted from the laser output section; an image rotator configured to rotate the deflected laser beam about a rotational axis arranged along a direction different from a direction of the deflected laser beam; and a beam focusing unit configured to focus the laser beam on the processed object.

In this device, the laser beam outputted from the laser output section is deflected and inputted into the image rotator. The laser beam, inputted into the image rotator, is rotated about a rotational axis arranged in a direction different from that of the deflected laser beam, and is then focused on the processed object by means of the beam focusing unit.

The deflecting unit configured to deflect a laser beam and the image rotator are herein separately provided, and thereby, the deflecting unit is not required to be rotated. Therefore, flexibility in designing of the deflecting unit in enhanced, and the deflecting unit can be easily structured. Further, the image rotator can rotate the incident laser beam at double the rotational speed of the image rotator. Therefore, the processing time can be reduced.

A laser processing device according to a second aspect of the present invention relates to the device of the first aspect, and further includes a splitting unit that is configured to split the deflected laser beam and is disposed between the laser output section and the image rotator.

The laser beam is herein split and focused on a plurality of positions on the processed object. Therefore, the processing time can be further reduced.

A laser processing device according to a third aspect of the present invention relates to the device of the second aspect, and wherein the splitting unit is configured to split the laser beam so that the split laser beams focused by the beam focusing unit are positioned on a circumference of a single imaginary circle.

In splitting a laser beam by the splitting unit, the laser beam can be also split so that the split laser beams are linearly aligned. However, compared to this, in rotating the laser beams by the image rotator, the processing time can be further reduced by aligning the laser beams on the rotational trajectory.

In view of the above, the device according to the third aspect is configured to split a laser beam so that the laser beams focused on the processing object are positioned on the circumference of a single imaginary circle, i.e., a rotational trajectory to be rotated by the image rotator.

A laser processing device according to a fourth aspect of the present invention relates to the device of any of the first to third aspects, and further includes a laser beam scanning section configured to scan the laser beam/beams focused by the beam focusing unit in an arbitrary direction within a plane arranged along a surface of the processed object.

A laser processing device according to a fifth aspect of the present invention relates to the device of the second aspect, and wherein the splitting unit includes a beam splitter.

A laser processing device according to a sixth aspect of the present invention relates to the device of the second aspect, and wherein the splitting unit includes a fiber splitter. Advantageous Effects of Invention

According to the present invention as described above, in processing a glass substrate using a laser beam, a structure for deflecting and splitting can be easily formed, and further, the processing time can be further reduced than a well-known processing.

### BRIEF DESCRIPTION OF THE DRAWINGS

FIG. 1 is an external perspective view of a laser processing device according to an exemplary embodiment of the present invention.
FIG. 2 is an enlarged perspective view of a work table.
FIG. 3 is an enlarged perspective view of a structure of a laser irradiation head.
FIG. 4 is a schematic diagram illustrating a deflecting and splitting mechanism and an image rotator.
FIG. 5 is a diagram illustrating an example of the deflecting and splitting mechanism.
FIG. 6 is a schematic diagram for explaining an operation of scanning beam focal spots.
FIG. 7 is a schematic diagram for explaining a working effect of the deflecting and splitting mechanism, a hollow motor (image rotator) and an fθ lens.
FIG. 8 is a schematic diagram for explaining a working effect of controlling beam focal spots in a Z-coordinate axis direction.
FIG. 9 is a diagram illustrating another example of the deflecting and splitting mechanism.
FIG. 10 is a diagram illustrating the aforementioned another example of the deflecting and splitting mechanism.
FIG. 11 is a diagram illustrating yet another example of the deflecting and splitting mechanism.
FIG. 12 is a diagram illustrating another example of a laser output section and the deflecting and splitting mechanism.
FIG. 13 is a diagram illustrating yet another example of the laser output section and the deflecting and splitting mechanism.
FIG. 14 is a diagram illustrating another example of beam focal positions.
FIG. 15 is a diagram illustrating yet another example of beam focal positions.

### DESCRIPTION OF THE EMBODIMENTS

### [Entire Structure]

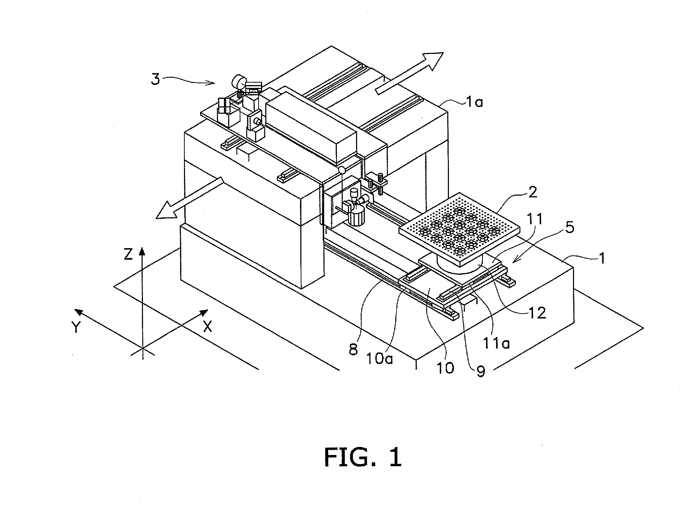

FIG. 1 illustrates the entire structure of a laser processing device according to an exemplary embodiment of the present invention. The present laser processing device is a device configured to irradiate a laser beam onto a glass substrate for executing various processing (e.g., forming of a hole) with respect to the glass substrate. The laser processing device includes a bed 1, a work table 2 on which a glass substrate as a workpiece is disposed, and a laser irradiation head 3 for irradiating a laser beam onto the glass substrate. As illustrated in FIG. 1, on a plane arranged along the top surface of the bead 1, axes arranged perpendicular to each other are herein defined as an X-coordinate axis and a Y-coordinate axis, and further, a vertical axis arranged perpendicular to the axes is defined as a Z-coordinate axis. Further, two opposite directions (i.e., a positive (+) direction and a negative (-) direction) along the X-coordinate axis are collectively defined as an X-coordinate axis direction; similarly, two opposite directions along the Y-coordinate axis are collectively defined as a Y-coordinate axis direction; yet similarly, two opposite directions along the Z-coordinate axis are collectively defined as a Z-coordinate axis direction.

### [Work Table and Moving Mechanism Thereof]

### <Work Table 2>

The work table 2 is formed in a rectangular shape. A table moving mechanism 5 is disposed below the work table 2 for moving the work table 2 in both of the X-coordinate axis direction and the Y-coordinate axis direction.

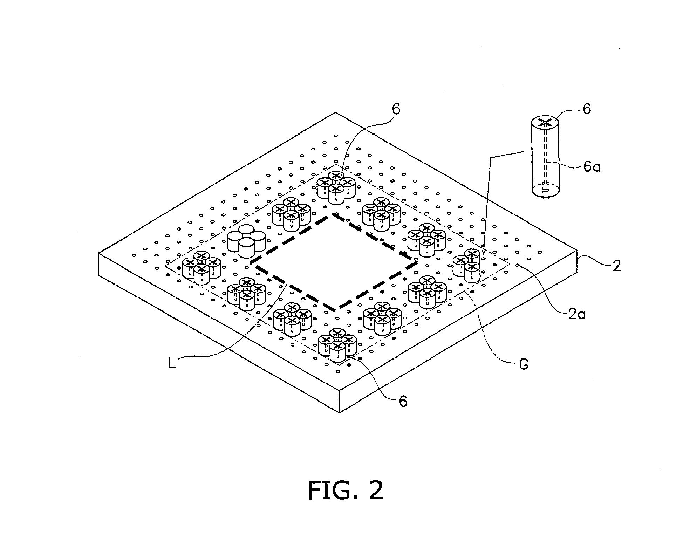

As illustrated in an enlarged view of FIG. 2, the work table 2 includes a plurality of blocks 6. The blocks 6 are members for supporting a glass substrate G (depicted with a dashed two-dotted line in the figure) and lifting up the glass substrate G from the surface of the work table 2. The blocks 6 can be attached to arbitrary positions on the work table 2 unless the blocks 6 are overlapped with a processing line (depicted with a dashed line) of the glass substrate G. Further, the work table 2 has a plurality of air inlet holes 2a formed in a grid arrangement, whereas each block 6 has an air inlet aperture 6a penetrating therethrough in the up-and-down direction. Also, the air inlet apertures 6a of the blocks 6 are herein connected to the air inlet holes 2a of the work table 2 on a one-to-one basis. The glass substrate G can be fitted to the blocks 6 when air is sucked through the air inlet apertures 6a and the air inlet holes 2a. It should be noted that the air inlet mechanism is formed by components such as a well-known exhaust pump. Therefore, detailed explanation thereof will be hereinafter omitted.

### <Table Moving Mechanism 5>

As illustrated in FIG. 1, the table moving mechanism 5 includes a pair of first guide rails 8, a pair of second guide rails 9, a first moving table 10 and a second moving table 11. The paired first guide rails 8 are disposed on the top surface of the bed 1 while being extended in the Y-coordinate axis direction. The first moving table 10 is disposed on the top sides of the second guide rails 8. The first moving table 10 has a plurality of guide parts 10a on the bottom surface thereof. The guide parts 10a are movably engaged with the second guide rails 8. The second guide rails 9 are disposed on the top surface of the first moving table 10 while being extended in the X-coordinate axis direction. The second moving table 11 is disposed on the top sides of the second guide rails 9. The second moving table 10 has a plurality of guide parts 11a on the bottom surface thereof. The guide parts 11a are movably engaged with the second guide rails 9. The work table 2 is disposed above the second moving table 11 while being attached thereto through a fixation member 12.

The aforementioned table moving mechanism 5 allows the work table 2 to move in both of the X-coordinate axis direction and the Y-coordinate axis direction. It should be noted that the first and second moving tables 10 and 11 are configured to be driven by a driving unit (e.g., a well-known motor). Detailed description thereof will be hereinafter omitted.

### [Laser Irradiation Head 3]

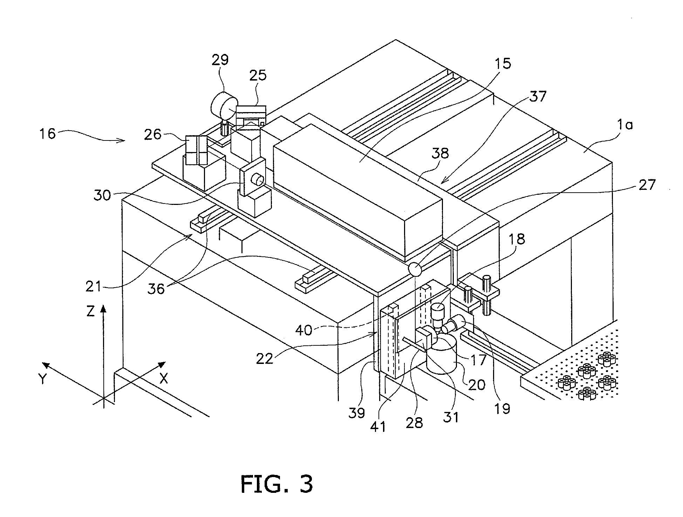

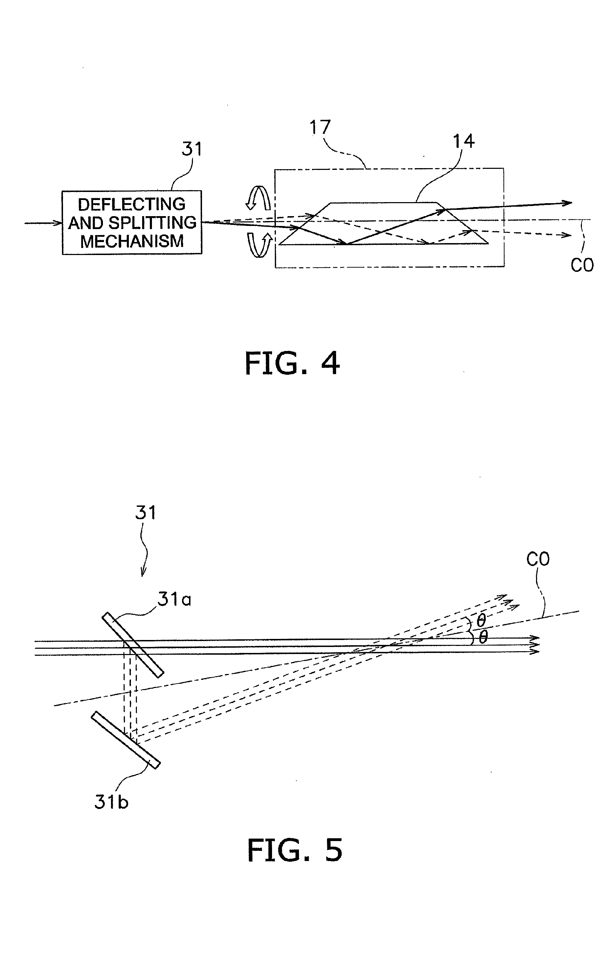

As illustrated in FIGS. 1 and 3, the laser irradiation head 3 is attached to a portal frame 1a disposed on the top surface of the bed 1. The laser irradiation head 3 includes a laser output section 15, an optical system 16, a hollow motor 17 provided with an image rotator 14 (see FIG. 4) built inside thereof, an X-directional galvano mirror 18, a Y-directional galvano mirror 19 and an fθ lens 20 functioning as a collective lens. Further, an X-coordinate axis directional moving mechanism 21 and a Z-coordinate axis directional moving mechanism 22 are disposed on the portal frame 1a. The X-coordinate axis directional moving mechanism 21 is configured to move the laser irradiation head 3 in the X-coordinate axis direction. On the other hand, the Z-coordinate axis directional moving mechanism 22 is configured to move the hollow motor 17, the X-directional galvano mirror 18, the Y-directional galvano mirror 19 and the fθ lens 20 in the Z-coordinate axis direction.

### <Laser Output Section 15>

The laser output section 15 is formed by a laser tube similar to a well-known one. The laser output section 15 is configured to irradiate a green laser beam having a wavelength of 532 nm to the opposite side of the work table 2 along the Y-coordinate axis.

### <Optical System 16 and Image Rotator 14>

The optical system 16 is configured to direct the laser beam irradiated from the laser output section 15 to the image rotator 14 built in the hollow motor 17. As illustrated in an enlarged view of FIG. 3, the optical system 16 includes first to fourth mirrors 25 to 28, a power monitor 29 configured to measure a laser power, a beam expander 30 and a deflecting and splitting mechanism 31.

The first mirror 25 is disposed in the vicinity of the output side of the laser output section 15. The first mirror 25 is configured to reflect the Y-coordinate axis directionally irradiated laser beam in the X-coordinate axis direction. The second mirror 26 is disposed in alignment with the first mirror 25 in the X-coordinate axis direction. The second mirror 26 is configured to reflect the X-coordinate axis directionally transmitting laser beam in the Y-coordinate axis direction in order to direct the reflected laser beam towards the work table 2. The third mirror 27 is disposed above the hollow motor 17. The third mirror 27 is configured to downwardly (i.e., Z-coordinate axis directionally) direct the laser beam reflected thereto by the second mirror 26. The fourth mirror 28 is disposed transversely adjacent to the deflecting and splitting mechanism 31. The fourth mirror 28 is configured to direct the laser beam reflected thereto by the third mirror 27 towards the hollow motor 17 through the deflecting and splitting mechanism 31. The beam expander 30 is disposed between the second mirror 26 and the third mirror 27. The beam expander 30 is provided for expanding the laser beam reflected thereto by the second mirror 26 to a parallel beam flux having a constant magnification. With the beam expander 30, the laser beam can be focused on a smaller spot.

As illustrated in FIG. 4, the deflecting and splitting mechanism 31 is disposed before the hollow motor 17 in the laser beam transmitting order. FIG. 5 illustrates an example of the deflecting and splitting mechanism 31. The deflecting and splitting mechanism 31 illustrated in FIG. 5 includes a beam splitter 31a and a reflective mirror 31b. The beam splitter 31a serves to split the laser beam directed thereto from the fourth mirror 28, whereas the reflective mirror 31b serves to reflect the laser beam directed thereto from the beam splitter 31a. With thus structured deflecting and splitting mechanism 31, the laser beam inputted into the beam splitter 31a can be split into two laser beams respectively deflected only by an angle θ about an optical axis C0 functioning as a rotational center.

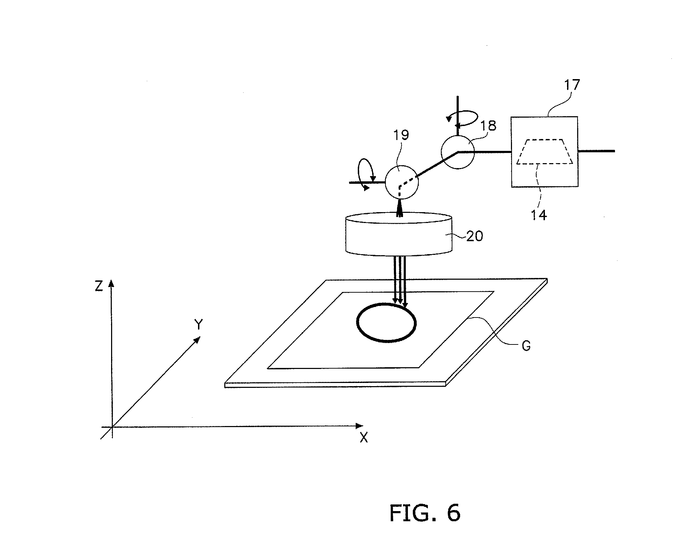

As described above, the image rotator 14 is disposed inside the hollow motor 17. As illustrated in schematic diagrams of FIGS. 4 and 6, the hollow motor 17 has the X-coordinate axis directionally extended rotational axis C0 in the center thereof, and its center part including the rotational axis C0 is hollow. Further, the image rotator 14 is disposed in the hollow part. The image rotator 14 has a well-known structure. In conjunction with rotation of the image rotator 14 about the optical axis C0, an image formed by the laser beam outputted therefrom is also rotated. It should be noted that, when the image rotator 14 is rotated at a predetermined speed, an image outputted therefrom is configured to be rotated at double the predetermined speed.

### <X and Y Directional Galvano Mirrors>

As is well known, the X-directional galvano mirror 18 and the Y-directional galvano mirror 19 are mirrors designed to be used for a galvano scanner. The X-directional galvano mirror 18 serves to scan a focal spot of the laser beam on the glass substrate G in the X-coordinate axis direction. On the other hand, the Y-directional galvano mirror 19 serves to scan the focal spot of the laser beam on the glass substrate G in the Y-coordinate axis direction. In conjunction with driving of these mirrors 18 and 19, the focal spot can be scanned within a predetermined range of a plane arranged along the surface of the glass substrate G in arbitrary directions.

### <Fθ Lens>

The fθ lens 20 serves to focus the laser beam either on the surface of the glass substrate G or in the inside of the glass substrate G at an arbitrary position in the Z-coordinate axis direction. It should be noted that the focal position in the Z-coordinate axis direction, as well as the focal positions in the X and Y coordinate axis directions, can be controlled only within a limited range of roughly 30 mm, for instance.

### <Support and Transport System for Laser Irradiation Head>

As described above, the aforementioned laser irradiation head 3 is supported by the portal frame 1a of the bed 1. In more detail, as illustrated in FIG. 3, a pair of third guide rails 36 is disposed on the top surface of the portal frame 1a while being extended in the X-coordinate axis direction. The paired third guide rails 36 and a driving mechanism (not illustrated in the figure) form the X-coordinate axis directional moving mechanism 21. Further, a support member 37 is supported by the paired third guide rails 36 while being movable in the X-coordinate axis direction. The support member 37 includes a transverse support member 38 and a vertical support member 39. The transverse support member 38 is supported by the third guide rails 36, whereas the vertical support member 39 is downwardly extended from an end, disposed on the same side as the work table 2, of the transverse support member 38. A pair of fourth guide rails 40 is disposed on a lateral surface of the vertical support member 39 while being extended in the Z-coordinate axis direction. The paired fourth guide rails 40 and a driving mechanism (not illustrated in the figure) form the Z-coordinate axis directional moving mechanism 22. A third moving table 41 is supported by the fourth guide rails 40 while being movable in the Z-coordinate axis direction.

Further, the transverse support member 38 supports the laser output section 15, the first to third mirrors 25 to 27, the power monitor 29 and the beam expander 30. On the other hand, the third moving table 41 supports the fourth mirror 28, the deflecting and splitting mechanism 31, the hollow motor 17, the X-directional galvano mirror 18, the Y-directional galvano mirror 19 and the fθ lens 20.

### [Operation]

Next, explanation will be provided for an operation of processing a glass substrate using a laser beam.

First, the plural blocks 6 are disposed on the surface of the work table 2. As illustrated in FIG. 2, the plural blocks 6 are herein disposed without being overlapped with the processing line L of the glass substrate G. The glass substrate G to be processed is then put on the plural blocks 6 set as described above.

Next, the X-coordinate axis directional moving mechanism 21 moves the laser irradiation head 3 to an appropriate position in the X-coordinate axis direction, whereas the table moving mechanism 5 moves the work table 2 to an appropriate position in the Y-coordinate axis direction. Accordingly, focal spots of a laser beam to be irradiated by the laser irradiation head 3 are appropriately located in a starting position of the processing line L.

Thus, the laser irradiation head 3 and the glass substrate G are moved to the processing positions. Then, a laser beam is irradiated onto the glass substrate G for processing the glass substrate G. The laser beam is herein irradiated by the laser beam output section 15. The irradiated laser beam is reflected by the first mirror 25, and is accordingly directed to the second mirror 26. It should be noted that the power monitor 29 measures the laser power of the laser beam incident upon the first mirror 25. The laser beam incident upon the second mirror 26 is reflected in the Y-coordinate axis direction and is directed to the third mirror 27, while being expanded into a laser beam flux by the beam expander 30. Then, the laser beam incident upon the third mirror 27 is downwardly reflected towards the fourth mirror 28. The laser beam incident upon the fourth mirror 28 is further reflected and inputted into the deflecting and splitting mechanism 31. As illustrated in FIG. 5, the deflecting and splitting mechanism 31 outputs two laser beams respectively deflected only by the angle θ about the optical axis C0. The two laser beams are inputted into the image rotator 14 disposed in the center part of the hollow motor 17.

A plurality of beam focal spots are formed on the glass substrate G by the image rotator 14, the X-directional galvano mirror 18, the Y-directional galvano mirror 19 and the fθ lens 20. The operation will be hereinafter explained in detail.

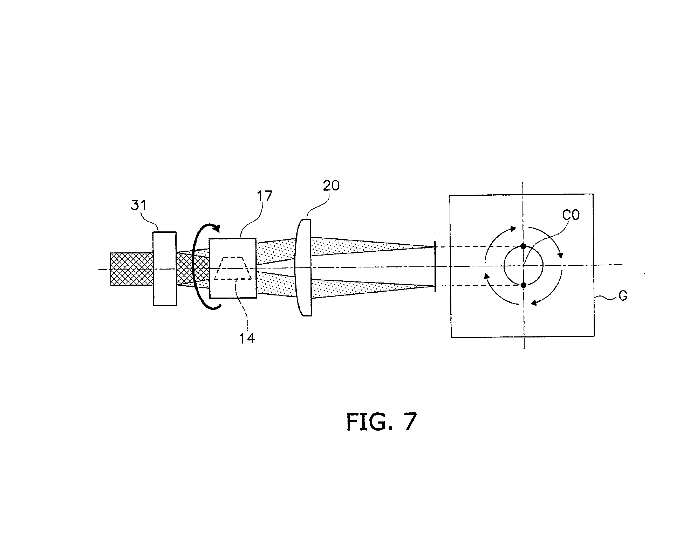

FIG. 7 schematically illustrates operations of the deflecting and splitting mechanism 31, the image rotator 14 and the fθ lens 20. The laser beam, inputted into the deflecting and splitting mechanism 31, is split into two laser beams. In this example, a case is exemplified that the deflecting and splitting mechanism 31 and the fθ lens 20 form two focal spots (beam focal spots) disposed on the circumference of an imaginary circle at 180-degree intervals. Then, the two beam focal spots can be rotated about the center axis C0 (optical axis C0) thereof by causing the hollow motor 17 to rotate the image rotator 14 about the optical axis C0.

As described above, when the image rotator 14 is herein rotated by the hollow motor 17 at a given rotational speed v, the two laser beams outputted from the image rotator 14 are configured to be rotated at a rotational speed 2v.

Then, the two galvano mirrors 18 and 19 are controlled to scan the two beam focal spots in a rotational motion along the processing line L (e.g., a rectangular line in FIG. 2, a circular line in FIG. 6, etc.). In other words, the two beam focal spots are scanned along the processing line, while being rotated about the center axis C0 thereof.

The glass substrate is herein configured to be removed at a height of tens of µm in a single processing using a laser beam. Therefore, in executing a boring processing for the glass substrate G, it is generally difficult to form a hole in the glass substrate G, i.e., to cut and drop a portion enclosed inside the processing line by a single scanning of the beam focal spots along the processing line.

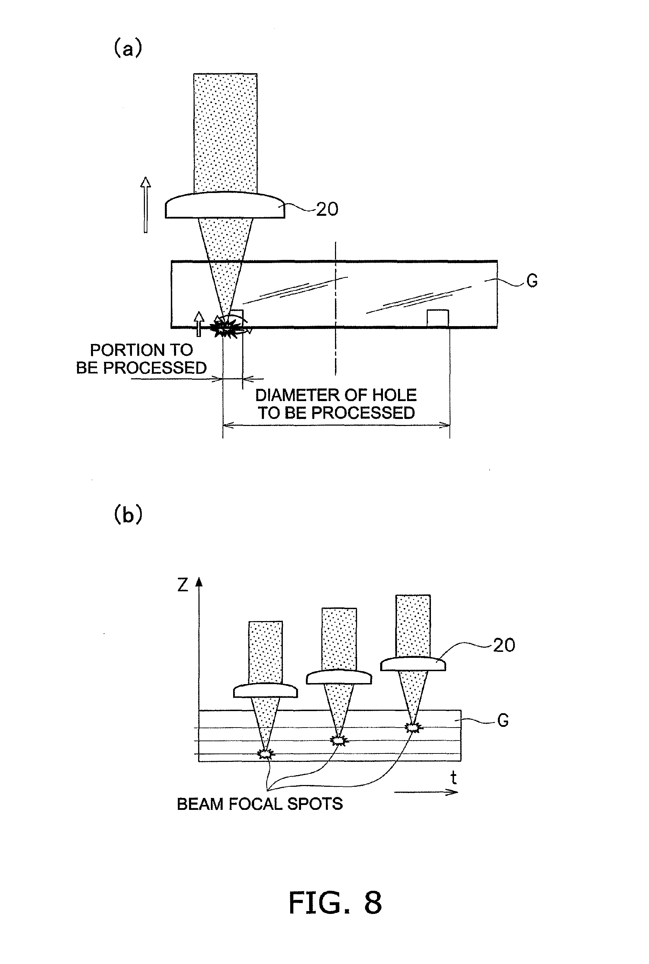

In view of the above, firstly, the fθ lens 20 is normally controlled for forming the beam focal spots (i.e., a processing portion) on the bottom surface of the glass substrate G (see FIG. 8 (a)) . Under the condition, the beam focal spots are circulated once along the processing line. Then, the beam focal spots are elevated by controlling the fθ lens 20 as illustrated in FIG. 8(b). Similarly, the beam focal spots are again circulated once along the processing line once. Then, the beam focal spots are further elevated. With repetition of the aforementioned operation, a hole can be formed in the glass substrate G by cutting and dropping the portion enclosed inside the processing line.

It should be noted that in some cases, the processing line covers a wide range and thus exceeds a scan range of the X-directional galvano mirror 18 and that of the Y-directional galvano mirror 19. In such case, the table moving mechanism 5 moves the work table 2 in the X-coordinate axis direction and the Y-coordinate axis direction after the aforementioned processing is executed. Accordingly, the position of the glass substrate G is changed. Similarly to the aforementioned manner, the glass substrate G can be subsequently processed by scanning the laser beam through the control of the both galvano mirrors 18 and 19.

### [Features]

(1) The mechanism for rotating the beam focal spots of the laser beam about the rotational axis (the image rotator 14) and the mechanism for deflecting and splitting the laser beam (the deflecting and splitting mechanism 31) are provided separately from each other. Therefore, it is not required to consider the rotational balance in forming the mechanism for deflecting and splitting, and flexibility in designing the mechanism is thereby enhanced.

(2) Due to a similar reason to the feature (1), it is possible to form two beam focal spots on a processed object and rotate the two beam focal spots about the rotational axis thereof even when the direction of the laser beam inputted into the deflecting and splitting mechanism 31 is the same as either of the directions of the two laser beams outputted from the deflecting and splitting mechanism 31 as illustrated in FIG. 5.

(3) With use of the image rotator 14, the beam focal spots can be rotated at a high speed on a processed object. Therefore, the processing time can be reduced.

### [Other Exemplary Embodiments]

The present invention is not limited to the aforementioned exemplary embodiment, and a variety of changes or modifications can be made without departing from the scope of the present invention.

### <Other Example 1 of Deflecting and Splitting Mechanism>

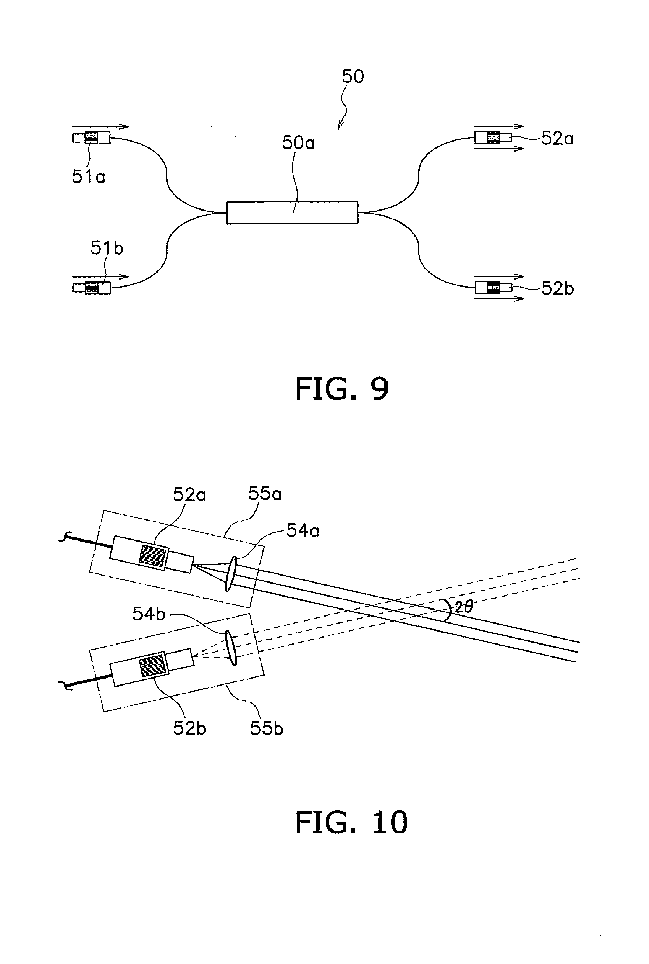

FIGS. 9 and 10 illustrate another example of the deflecting and splitting mechanism. In this example, a fiber splitter 50 is employed as the deflecting and splitting mechanism. The fiber splitter 50 illustrated in FIG. 9 includes two input connectors 51a and 51b and two output connectors 52a and 52b. Further, the filer splitter 50 includes therebetween a fiber fused part 50a.

The fiber splitter 50 is configured to split and output the laser beam, inputted through the respective input connectors 51a and 51b, to the two output connectors 52a and 52b. Therefore, in applying the fiber splitter 50 to the device illustrated in FIG. 1, the laser beam from the fourth mirror 28 may be inputted into only one of the input connectors.

Further, as illustrated in FIG. 10, collimator lens 54a and 54b are respectively disposed on the output sides of the two output connectors 52a and 52b in the fiber splitter 50, and units 55a and 55b formed by these elements are disposed at a predetermined angle. With the structure, the deflecting and splitting mechanism is formed.

In the example of FIG. 10, the laser beams from the two units 55a and 55b intersect at an angle 2θ. When the arrangement of these units 55a and 55b is changed, the split angle (2θ) can be also changed.

It should be noted that the laser beam may be configured to be split into three or more beams. In this case, it is preferable to dispose the focal spots of the three or more laser beams on the circumference of a single imaginary circle on a glass substrate.

### <Other Example 2 of Deflecting and Splitting Mechanism>

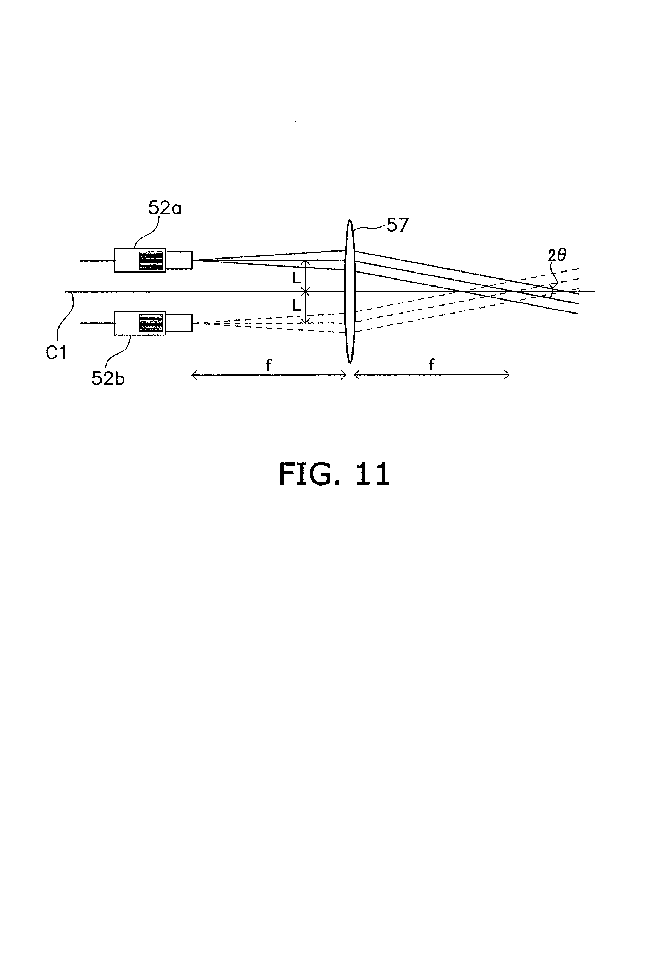

FIG. 11 illustrates yet another example of the deflecting and splitting mechanism. In this example, similarly to the example illustrated in FIGS. 9 and 10, a fiber splitter is employed as the deflecting and splitting mechanism. Further, the two output connectors 52a and 52b are disposed so that laser beams can be emitted therefrom in parallel to each other. Yet further, a lens 57 is disposed on the output sides of the two output connectors 52a and 52b.

In the example of FIG. 11, when distances L from an optical axis C1 to the two output connectors 52a and 52b is changed (but the distances L from the optical axis C1 must be equal), the split angle (2θ) can be also changed.

It should be noted that, similarly to the aforementioned example, a laser beam may be split into three or more laser beams and beam focal spots of the three or more laser beams may be configured to be disposed on the circumference of a single imaginary circle on a glass substrate.

### <Other Example 3 of Deflecting and Splitting Mechanism>

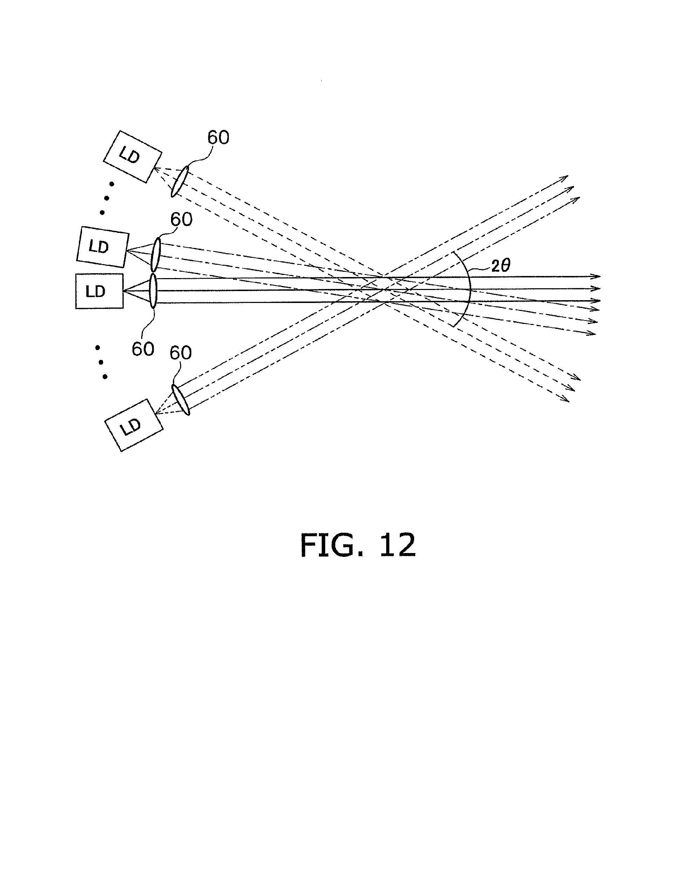

FIG. 12 illustrates an example that a plurality of laser output sections are provided. In short, in this example, a plurality of semiconductor lasers LD are provided. Further, collimator lenses 60 are disposed on the output sides of the semiconductor lasers LD on a one-to-one basis. A laser beams is herein split into a plurality of laser beams within a range of the split angle 2θ. An image rotator and an fθ lens are disposed after the elements illustrated in FIG. 12 in the laser beam transmitting order.

It should be noted that the plural semiconductor lasers LD are disposed so that beam focal spots of the plural laser beams are positioned on the circumference of a single imaginary circle on a glass substrate.

### <Other Example 4 of Deflecting and Splitting Mechanism>

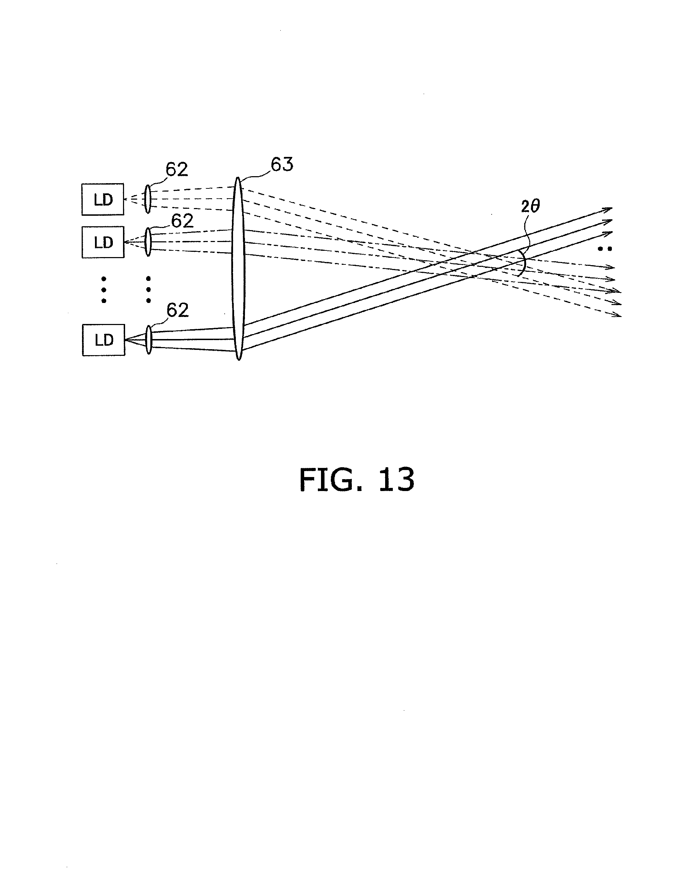

An example illustrated in FIG. 13 is a modification of the example illustrated in FIG. 12. This device includes: a plurality of semiconductor lasers LD; lenses 62 disposed correspondingly to the respective semiconductor lasers LD on a one-to-one basis; and a collimator lens 63 into which the laser beams, having passed the respective lenses 62, are inputted. Similarly to the example illustrated in FIG. 12, an image rotator and an fθ lens are disposed after the elements illustrated in FIG. 13 in the laser beam transmitting order. Further, the plural semiconductor lasers LD are disposed so that beam focal spots of the plural laser beams are positioned on the circumference of a single imaginary circle on a glass substrate.

### <Other Examples>

(a) In the aforementioned exemplary embodiment, the deflecting and splitting mechanism is disposed before the image rotator in the laser beam transmitting order, and is configured to deflect and split the laser beam inputted therein. However, a mechanism configured to only deflect the laser beam may be provided.

(b) In the aforementioned exemplary embodiment, the fθ lens functioning as a beam focusing unit is disposed after the image rotator in the laser beam transmitting order. However, the fθ lens may be disposed before the image rotator in the laser beam transmitting order.

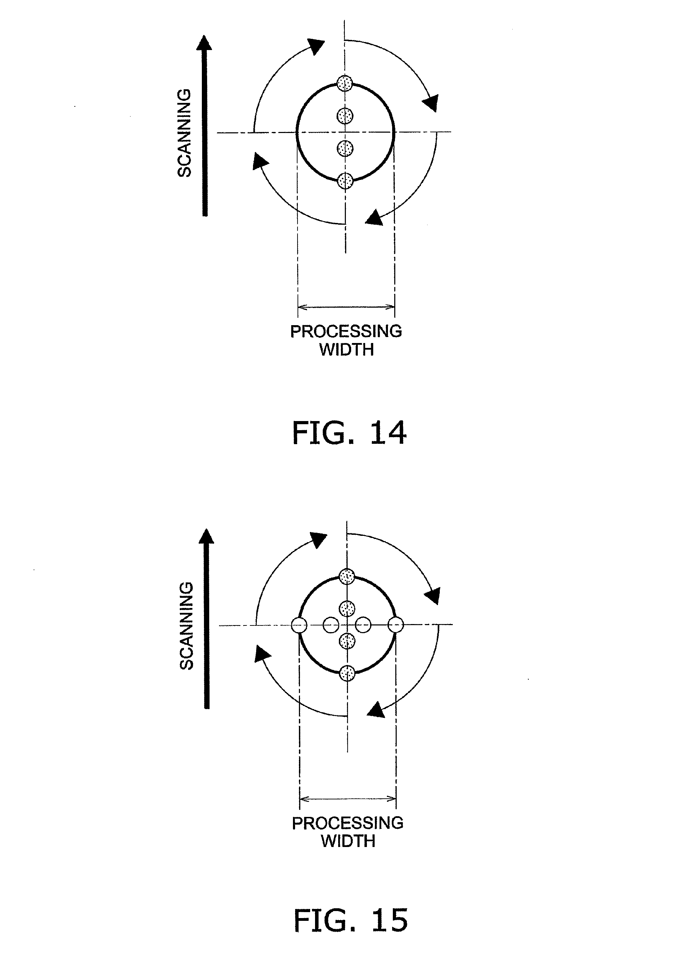

(c) In the aforementioned exemplary embodiment, as illustrated in FIG. 7, two beam focal spots are formed on the circumference of an imaginary circle. However, the number and the arrangement of the beam focal spots are not limited to the above. For example, as illustrated in FIG. 14, a laser beam may be split into four laser beams and the beam focal spots of the four laser beams may be configured to be linearly aligned. In this case, the laser beams are supposed to be uniformly irradiated within a processing width.

Further, as illustrated in FIG. 15, a plurality of beam focal spots may be formed while being radially disposed. Specifically, in the example of FIG. 15, four beam focal spots are formed on the circumference of an imaginary circle at equal angular intervals, and further, plural beam focal spots, including these four beam focal spots, are formed so that four of the plural focal spots are linearly aligned in the X-coordinate axis direction at equal intervals while another four of the plural focal spots are linearly aligned in the Y-coordinate axis direction at equal intervals.

(d) The fθ lens is used as the beam focusing unit. However, the beam focusing unit is not limited to the fθ lens as long as it is a lens enabled to focus a laser beam.

(e) In the aforementioned exemplary embodiment, the glass substrate is used as the processed object. However, the processed object is not limited to the glass substrate as long as it is a member that can be processed by means of a laser beam.

### REFERENCE SIGNS LIST

- 2: Work table

- 3: Laser irradiation head
- 5: Table moving mechanism
- 14: Image rotator
- 15: Laser output section
- 16: Optical system
- 17: Hollow motor
- 18: X-directional galvano mirror
- 19: Y-directional galvano mirror
- 20: Fθ lens
- 31: Deflecting and splitting mechanism
- 50: Fiber splitter
Either a deflecting unit or a deflecting and splitting unit is easily structured by enhancing flexibility in designing thereof, and further, a processing object is inhibited from being damaged when being processed.
[Means for Achieving Object] The present device includes: a work table 2 on which a processed object is disposed; a laser output section 15 configured to output a laser beam; a deflecting and splitting mechanism 31 configured to deflect and split the laser beam outputted from the laser output section 15; an image rotator 14 configured to rotate the deflected laser beam about a rotational axis arranged in a direction different from the direction of the deflected laser beam; and an fθ lens 20 configured to focus the laser beam on the processed object.

## Claims

1. A laser processing device configured to irradiate a laser beam onto a processed object for processing the processed object, the laser processing device comprising:
a work table on which the processed object is disposed;
a laser output section configured to output the laser beam;
a laser beam deflecting unit configured to deflect the laser beam outputted from the laser output section;
an image rotator configured to rotate the deflected laser beam about a rotational axis arranged along a direction different from a direction of the deflected laser beam; and
a beam focusing unit configured to focus the laser beam on the processed object.

2. The laser processing device recited in claim 1, further comprising:
a splitting unit configured to split the deflected laser beam, the splitting unit disposed between the laser output section and the image rotator.

3. The laser processing device recited in claim 2, wherein the splitting unit is configured to split the laser beam so that the split laser beams focused by the beam focusing unit are positioned on a circumference of a single imaginary circle.

4. The laser processing device recited in any of claims 1 to 3, further comprising:
a laser beam scanning section configured to scan the laser beam/beams focused by the beam focusing unit in an arbitrary direction within a plane arranged along a surface of the processed object.

5. The laser processing device recited in claim 2, wherein the splitting unit includes a beam splitter.

6. The laser processing device recited in claim 2, wherein the splitting unit includes a fiber splitter.
